# FASCICULE DE BREVET EUROPEEN

(11) **EP 3 895 296 B1**
(45) Date de publication et mention de la délivrance du brevet: **16.11.2022**
(21) Numéro de dépôt: 19817716.4
(22) Date de dépôt: 12.12.2019
(51) Int. Cl.: H02K 17/16

(54) **ROTOR POUR MACHINE ELECTRIQUE TOURNANTE ASYNCHRONE A CAGE D'ECUREUIL ET MACHINE TOURNANTE ASSOCIEE**
ROTOR FÜR EINE ASYNCHRONE ELEKTRISCHE DREHMASCHINE MIT KURZSCHLUSSLÄUFER UND ZUGEHÖRIGE DREHMASCHINE
ROTOR FOR A SQUIRREL-CAGE ASYNCHRONOUS ROTATING ELECTRICAL MACHINE AND ASSOCIATED ROTATING MACHINE

(30) Priorité: 14.12.2018 FR 1872970
(43) Date de publication de la demande: 20.10.2021
(73) Titulaire: GE Energy Power Conversion Technology Limited, Rugby Warwickshire CV21 1BU (GB)
(72) Inventeur: GALMICHE, Christophe, 54200 Toul (FR)
(74) Mandataire: Serjeants LLP
(86) Numéro de dépôt international: PCT/EP2019/084857
(87) Numéro de publication internationale: WO 2020/120662

(56) Documents cités:
- EP-A2- 1 102 384
- WO-A1-2010/052226
- DE-A1-102012 110 147
- JP-A- H0 236 752
- JP-A- H0 622 515
- JP-A- H10 178 755
- JP-U- S5 587 180

## Description

La présente invention concerne les machines électriques tournantes asynchrones à cage d'écureuil et se rapporte plus particulièrement à un dispositif de retenue des barres conductrices incorporées dans un rotor de la machine.

La présente invention concerne également une machine électrique tournante comprenant un tel rotor.

Les barres conductrices sont logées dans des logements d'une masse magnétique du rotor et réparties uniformément sur au moins un diamètre de la masse magnétique.

Dans le document EP0608675, un perçage est effectué depuis la périphérie externe de la masse magnétique jusqu'à la barre conductrice de manière à insérer une goupille ou une vis de maintien dans le perçage pour maintenir la barre conductrice selon une direction axiale et empêcher que la barre tourne sur elle-même et afin qu'elle soit maintenue dans son logement.

La goupille ou la vis de maintien est de préférence insérée au centre de la longueur de la barre.

La barre fixée en son centre est libre de se dilater selon des directions axiales de part et d'autre de la goupille ou de la vis de maintien.

Le couple et la puissance développés par une machine électrique tournante asynchrone dépendent notamment de l'intensité des courants induits traversant les barres conductrices.

Cependant, afin d'insérer la goupille ou la vis de maintien dans la barre conductrice, celle-ci est partiellement percée.

Par conséquent, la section de passage du courant induit est réduite, entraînant une diminution du couple et de la puissance développés par la machine électrique tournante à cage d'écureuil.

On pourra également se référer au document US2012/0262024 dans lequel une première extrémité des barres conductrices est maintenue dans une couronne de court-circuit par une vis sans tête insérée dans la couronne de court-circuit et l'extrémité de chaque barre selon une direction axiale, la deuxième extrémité des barres étant libre de se dilater.

Cependant, la dilatation thermique axiale est plus importante puisque la barre n'est pas fixée à mi-longueur mais à l'une de ses extrémités, ce qui engendre une usure par friction entre l'extrémité libre de la barre et la couronne de court-circuit.

De plus, comme le point de fixation de la barre n'est pas situé à mi-longueur de la barre, les efforts axiaux générés par la dilation thermique de la barre ne se compensent pas, ce qui provoque une concentration de contraintes au point de fixation susceptibles de cisailler la vis sans tête ou nécessite une vis de fixation sans tête de taille plus grande, réduisant d'autant la section de passage du courant induit.

JP S55-87180 divulge un rotor pour machine électrique tournante asynchrone à cage d'écureuil comprenant:
- deux éléments de compaction enserrant une masse magnétique cylindrique,
- des disques de court-circuit intercalés entre la masse magnétique et les éléments de compaction,
- des barres conductrices logées dans des logements de la masse magnétique et réparties uniformément sur au moins un diametre de la masse magnétique de sorte que les disques de court-circuit et les barres conductrices forment une cage d'écureuil, et
- au moins un des éléments de compaction et des disques de court-circuit comprenant des trous d'insertion disposes chacun en regard d'un logement.

DE102012110147 divulgue un rotor pour moteur asynchrone.

Il est donc proposé de pallier les inconvénients des rotors pour machine électrique tournante asynchrone à cage d'écureuil selon l'état de la technique.

Au vu de ce qui précède, l'invention propose, selon un aspect, un rotor pour machine électrique tournante asynchrone à cage d'écureuil, comprenant deux éléments de compaction enserrant une masse magnétique cylindrique, des disques de court-circuit intercalés entre la masse magnétique et les éléments de compaction, et des barres conductrices logées dans des logements de la masse magnétique et réparties uniformément sur au moins un diamètre de la masse magnétique de sorte que les disques de court-circuit et les barres conductrices forment une cage d'écureuil, au moins un des éléments de compaction et des disques de court-circuit comprenant des trous d'insertion disposés chacun en regard d'un logement.

Des moyens de retenue sont insérés dans chaque trou d'insertion pour retenir les barres conductrices dans les logements.

Selon une caractéristique, le trou d'insertion est borgne, les moyens de retenue comprenant un élément flexible intercalé entre une extrémité de la barre conductrice et le fond du trou borgne de manière à maintenir la barre selon une direction axiale.

De préférence, chaque trou d'insertion traversant comprend un taraudage, les moyens de retenue comprenant un bouchon et un élément flexible, le bouchon étant vissé dans le taraudage de manière à obturer l'extrémité libre de l'élément de compaction. L'élément flexible est intercalé entre une extrémité de la barre conductrice et le bouchon de manière à maintenir la barre selon une direction axiale.

Selon une autre caractéristique, le bouchon comprend un évidement dans lequel est logé l'élément flexible.

Avantageusement, chaque trou d'insertion comprend en outre une gorge comprenant un joint de manière à rendre étanche le contact entre le bouchon et l'élément de compaction.

Selon une autre caractéristique, le bouchon comprend un trou de sorte qu'un fluide de refroidissement s'écoule à travers les moyens de retenue.

Avantageusement, le bouchon comprend un taraudage accueillant une duse calibrant le débit de fluide de refroidissement.

Dans un mode de réalisation, l'extrémité de la barre comprend une rainure débouchant radialement, le trou d'insertion comprenant une rainure de guidage, les moyens de retenue comprenant en outre un élément de retenue intercalé entre l'extrémité de la barre et l'élément flexible. L'élément de retenue comprend un talon et une languette, le talon s'encastrant dans la rainure débouchant de manière à former un épaulement en contact avec l'extrémité de la barre et la languette coulissant dans la rainure de guidage de manière à empêcher la rotation de la barre sur elle-même.

Dans un autre mode de réalisation, l'extrémité de la barre comprend un méplat, le trou d'insertion comprenant une rainure de guidage, les moyens de retenue comprenant en outre un élément de retenue intercalé entre l'extrémité de la barre de retenue et l'élément flexible. L'élément de retenue comprend un talon et une languette, le talon comprenant un méplat venant en contact avec le méplat de la barre de manière à former un épaulement en contact avec l'extrémité de la barre et la languette coulissant dans la rainure de guidage de manière à empêcher la rotation de la barre sur elle-même.

Selon une autre caractéristique, le talon ou la languette est rapporté sur l'élément de retenue.

Avantageusement, l'élément flexible comprend un ressort.

Selon une autre caractéristique, l'élément flexible comprend au moins une rondelle ressort de type Belleville.

Avantageusement, l'extrémité de la barre est creuse et comprend une rainure débouchant radialement, le trou d'insertion comprenant une rainure de guidage, l'élément flexible comprenant un ressort, une première extrémité du ressort s'encastrant dans la rainure débouchant et la deuxième extrémité du ressort s'encastrant dans la rainure de guidage de manière à empêcher la rotation de la barre sur elle-même.

De préférence, les moyens de retenue comprennent en outre un élément isolant électrique disposé entre la barre conductrice et l'élément flexible.

Avantageusement, l'élément de compaction comprend un plateau de serrage ou une bride de compaction d'un demi-arbre non traversant.

Selon une autre caractéristique, la masse magnétique comprend des tôles magnétiques compactées.

De préférence, la masse magnétique comprend un empilement de plaques métalliques.

Avantageusement, la masse magnétique comprend un corps monobloc.

Selon un autre aspect, il est proposé une machine électrique tournante asynchrone comprenant un rotor tel que défini précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
[Fig 1] illustre un mode de réalisation d'une machine électrique tournante asynchrone à cage d'écureuil ;
[Fig 2] illustre une coupe partielle d'un premier mode de réalisation du rotor ;
[Fig 3] illustre une coupe partielle d'un deuxième mode de réalisation du rotor ;
[Fig 4] illustre une coupe partielle d'un troisième mode de réalisation du rotor ;
[Fig 5] illustre une coupe partielle d'un quatrième mode de réalisation du rotor ;
[Fig 6] illustre une coupe partielle d'un cinquième mode de réalisation du rotor ;
[Fig 7] illustre une coupe partielle d'un sixième mode de réalisation du rotor ;
[Fig 8] illustre un septième mode de réalisation du rotor ;
[Fig 9]
[Fig 10]

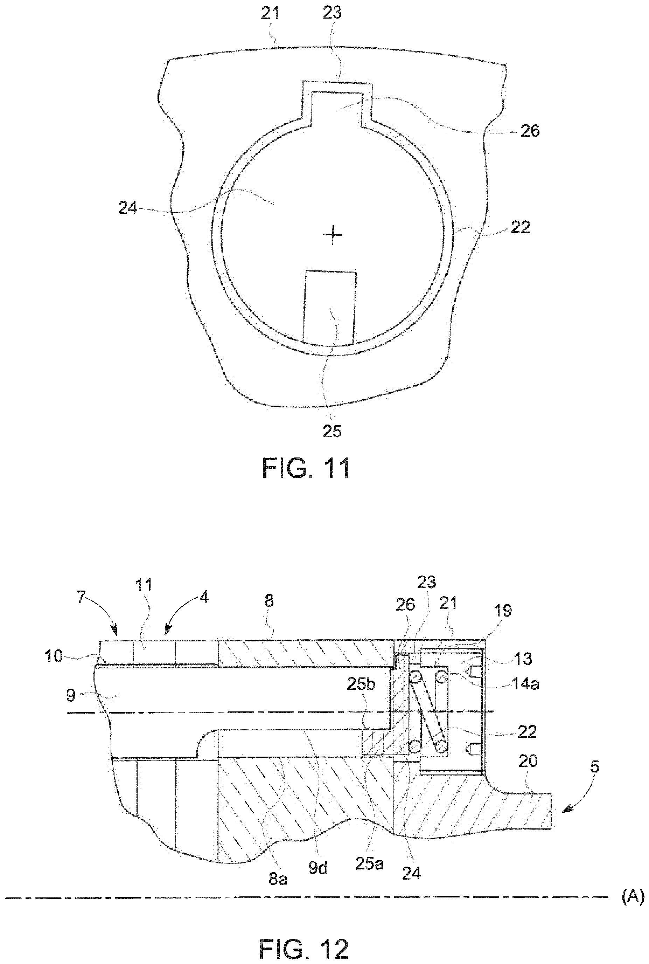

[Fig 11] illustrent un huitième mode de réalisation du rotor ;
[Fig 12]
[Fig 13]

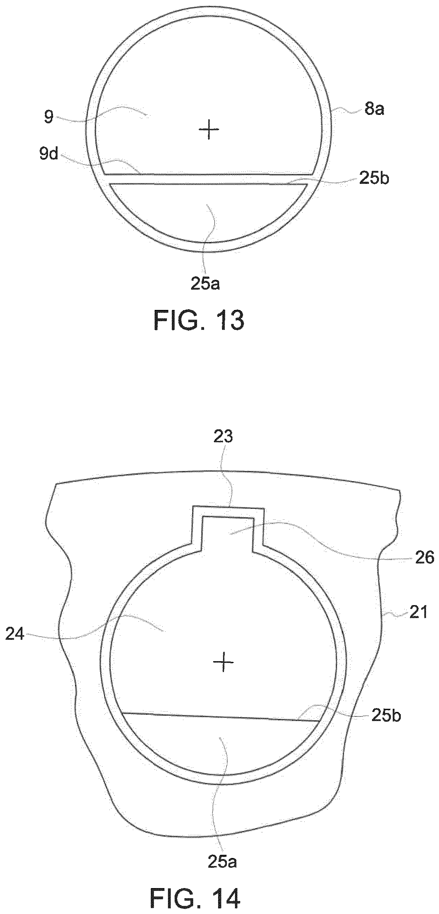

[Fig 14] illustrent un neuvième mode de réalisation du rotor ;
[Fig 15]
[Fig 16]

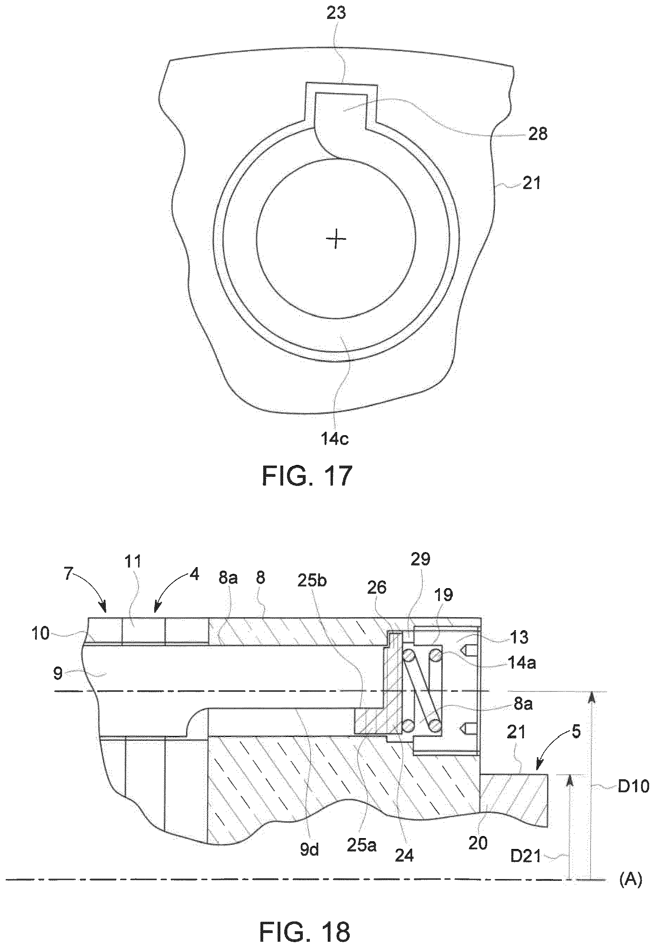

[Fig 17] illustrent un dixième mode de réalisation du rotor ; et
[Fig 18] illustre un onzième mode de réalisation du rotor.

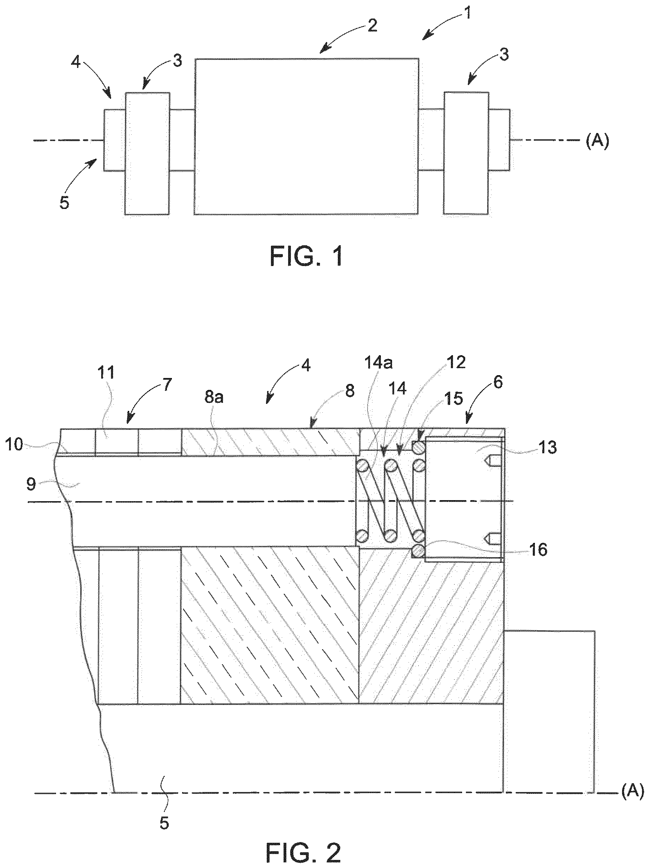

On se réfère à la figure 1 qui illustre un mode de réalisation d'une machine électrique tournante asynchrone 1 à cage d'écureuil comprenant un stator 2, des paliers 3 et un rotor 4 inséré dans le stator 2 et les paliers 3.

Le rotor 4 comprend un arbre rotorique 5 réalisé par exemple en acier, d'axe (A) confondu avec l'axe de rotation du rotor 4.

On se réfère à la figure 2 qui illustre une coupe partielle d'un premier mode de réalisation du rotor 4 selon une direction axiale du rotor.

Le rotor 4 comprend deux éléments de compaction comprenant des plateaux de serrage 6 enserrant une masse magnétique 7 cylindrique, des disques de court-circuit 8 intercalés entre la masse magnétique 7 et les plateaux de serrage 6 de compaction, et des barres conductrices 9 logées dans des logements 10 de la masse magnétique et réparties uniformément sur un diamètre de la masse magnétique.

Les disques de court-circuit 8 comportent des trous 8a d'insertion, de préférence circulaires, répartis uniformément sur au moins un diamètre des disques de court-circuit, et sensiblement coaxiaux aux logements 10.

Le diamètre extérieur des plateaux de serrage 6 est sensiblement égal au diamètre extérieur de la masse magnétique 7 ou des disques de court-circuit 8.

Les logements 10 et les trous 8a sont dimensionnés pour permettre l'insertion des barres conductrices 9 dans la masse magnétique et pour compenser la dilatation des barres conductrices 9 sous l'effet de la chaleur générée par le passage du courant lors de son fonctionnement et ainsi empêcher un balourd thermo-mécanique par la dilatation libre des barres conductrices, notamment selon une direction axiale du rotor.

Les disques de court-circuit 8 et les barres conductrices 9 sont réalisés par exemple en cuivre et sont électriquement reliés entre eux pour former une cage d'écureuil lorsque le rotor est animé d'un mouvement de rotation sous l'effet de la force centrifuge poussant la barre conductrice contre le trou 8a des disques de court-circuit pour établir un contact électrique entre la barre conductrice et les disques de court-circuit.

La masse magnétique 7 comprend des plaques métalliques 11, l'épaisseur des plaques métalliques étant de préférence supérieure à 5% du diamètre extérieur de la masse magnétique 7.

En variante, la masse magnétique 7 peut comprendre des tôles magnétiques d'épaisseur inférieure à 2 mm, préférentiellement 0.65 mm ou 0.5 mm.

Selon encore une autre variante, la masse magnétique 7 peut comprendre un corps monobloc en acier.

Au moins un plateau de serrage 6 comprend des trous d'insertion 12 disposés chacun en regard d'un logement 10 et d'un trou 8a.

Le trou d'insertion 12 est traversant permettant l'insertion de la barre conductrice dans la masse magnétique, et partiellement taraudé.

Des moyens de retenue sont insérés dans chaque trou d'insertion 12 d'au moins un plateau de serrage 6 pour retenir les barres conductrices 9 dans les logements 10.

Les moyens de retenue comprennent un bouchon 13 et un élément flexible 14, le bouchon 13 étant vissé dans le taraudage de manière à obturer l'extrémité libre du plateau de serrage 6.

L'élément flexible 14 est intercalé entre une extrémité de la barre conductrice 9 et le bouchon 13 de manière à maintenir la barre 9 selon une direction axiale.

L'élément flexible comprend un ressort 14a.

L'élément flexible permet d'absorber la dilation thermique de la barre conductrice 9 selon la direction axiale, la barre conductrice 9 étant montée librement dans le logement 10 et dans le trou 8a.

Bien entendu, un seul ou les deux éléments de compaction peuvent comprendre des trous d'insertion logeant les moyens de retenue, le nombre de trous d'insertion de chaque élément de compaction étant égal au nombre de barres conductrices 9.

Le trou d'insertion 12 comprend en outre une gorge 15 comprenant un joint 16 de manière à rendre étanche le contact entre le bouchon 13 et le plateau de serrage 6.

Le joint 16 limite la détérioration des barres conductrices 9 lorsque le rotor 4 est utilisé dans un environnement chimiquement agressif.

Le joint 16 est de préférence torique, en inox, en polymère ou métallique, de préférence d'une seule pièce sans coupure ou raboutage.

En variante, le trou d'insertion ne comprend pas de gorge ni de joint.

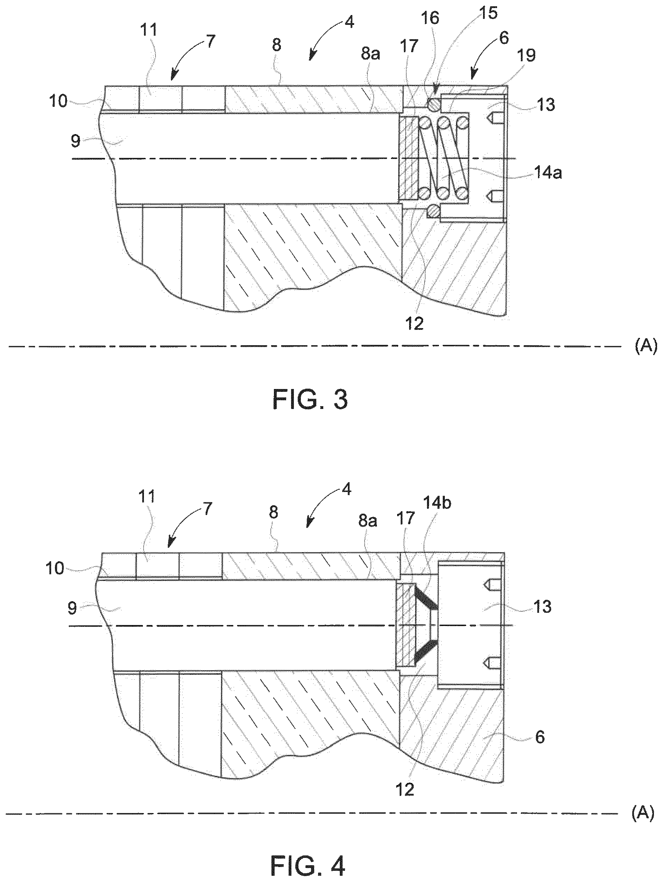

La figure 3 illustre une coupe partielle d'un deuxième mode de réalisation du rotor 4 selon la direction axiale.

Ce mode de réalisation diffère du mode de réalisation illustré à la figure 2 en ce que les moyens de retenue comprennent en outre un élément isolant 17 disposé entre la barre conductrice 9 et le ressort 14a.

L'élément isolant 17 est un isolant électrique empêchant la circulation de courants parasites dans le plateau de serrage 6 améliorant le rendement de la machine tournante 1.

En outre, le bouchon 13 comprend un évidement 19 dans lequel est logé le ressort 14a permettant de raccourcir la longueur axiale du moyen de retenue.

La figure 4 illustre une coupe partielle d'un troisième mode de réalisation du rotor 4 selon la direction axiale.

Ce mode de réalisation diffère du mode de réalisation illustré à la figure 2 en ce que le trou d'insertion 12 ne comprend pas de gorge logeant un joint, l'élément flexible 14 comprend une rondelle ressort de type Belleville 14b et l'élément isolant 17 est disposé entre la barre conductrice 9 et la rondelle Belleville 14b.

La rondelle ressort de type Belleville 14b est particulièrement adaptée lorsque le rotor 4 est soumis à de grandes forces centrifuges (par exemple de 1000g à 40000g), la section de la rondelle soumise audites forces étant réduite par rapport à la section du ressort 14a dont les spires du ressort 14a se déforment sous l'effet desdites forces.

En variante, l'élément flexible 14 peut comprendre plusieurs rondelles ressort de type Belleville 14b montées en série et/ou en parallèle.

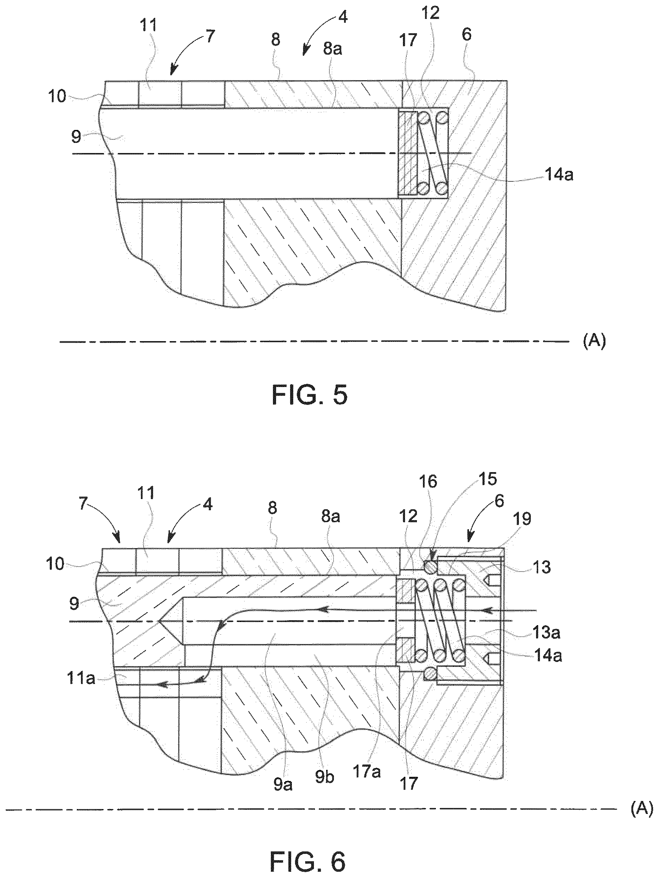

La figure 5 illustre une coupe partielle d'un quatrième mode de réalisation du rotor 4 selon la direction axiale.

Ce mode de réalisation diffère du mode de réalisation illustré à la figure 2 en que le trou d'insertion 12 est borgne et ne comprend pas de gorge logeant un joint, les moyens de retenue ne comportent pas de bouchon 13 et l'élément isolant 17 est disposé entre la barre conductrice 9 et le ressort 14a. Le ressort 14a est intercalé entre l'extrémité de la barre conductrice 9 et le fond du trou 12 borgne de manière à maintenir la barre selon la direction axiale.

En variante, l'élément flexible 14 comprend au moins une rondelle ressort de type Belleville 14b.

En variante, le trou d'insertion 12 borgne peut comprendre la gorge 15 logeant le joint 16.

La figure 6 illustre une coupe partielle d'un cinquième mode de réalisation du rotor 4 selon la direction axiale.

Ce mode de réalisation diffère du mode de réalisation illustré à la figure 2 en ce que les plaques métalliques 11 comprennent un évidement 11a de manière à former un canal de refroidissement situé entre la barre conductrice 9 et l'axe (A) de rotation du rotor. L'extrémité de la barre conductrice 9 comprend un trou borgne 9a orienté selon une direction axiale et une fente 9b ouvrant le trou borgne 9a selon une direction axiale, l'élément isolant 17 comprend un trou 17a, et le bouchon 13 comprend l'évidement 19 et un trou 13a traversant.

Le trou borgne 9a et les trous 13a et 17a sont circulaires et sensiblement coaxiaux de sorte qu'un fluide de refroidissement s'écoule dans le trou 13a, puis 17a, puis le trou borgne 9a, puis dans la fente 9b pour s'écouler dans le canal formé par l'évidement 11a.

Le fluide de refroidissement refroidit les barres conductrices 9 du rotor 4.

Le trou borgne 9a et les trous 13a et 17a peuvent toutefois être de forme quelconque.

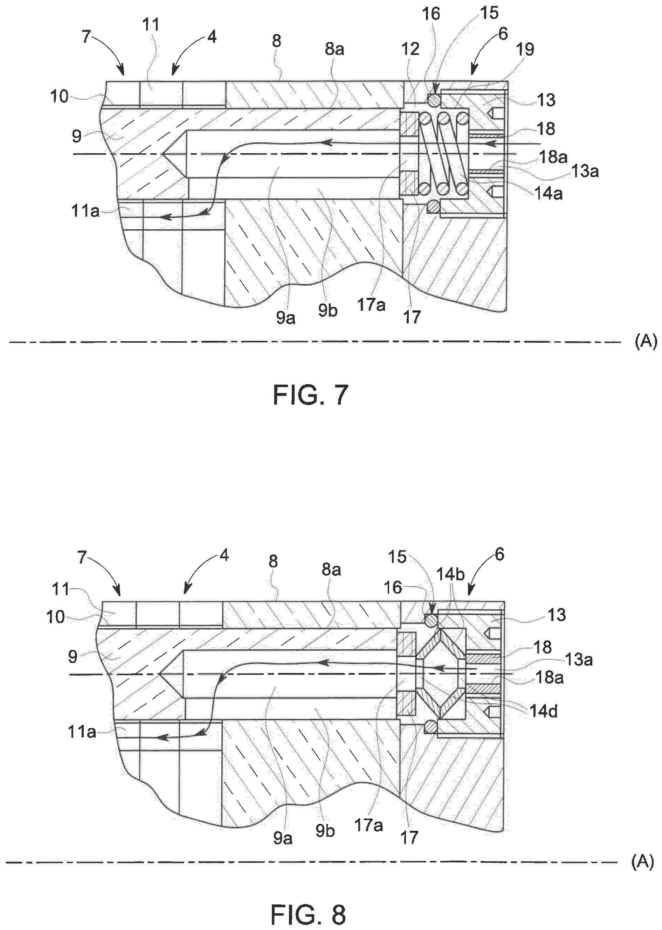

La figure 7 illustre une coupe partielle d'un sixième mode de réalisation du rotor 4 selon la direction axiale.

Ce mode de réalisation diffère du mode de réalisation illustré à la figure 6 en ce que le trou 13a comprend un taraudage accueillant une duse 18 comprenant un orifice 18a de manière à régler et calibrer le débit de fluide de refroidissement s'écoulant dans le rotor 4.

Si le débit du fluide de refroidissement n'est pas conforme au débit souhaité, il suffit de remplacer la duse 18 par une autre duse comprenant un orifice plus grand ou plus petit selon que le débit de fluide doit être augmenté ou diminué.

Les modes de réalisation décrits précédemment maintiennent les barres conductrices 9 selon une direction axiale.

Cependant, les barres conductrices 9 peuvent tourner sur elles-mêmes.

Dans ce qui suit, les moyens de retenue maintiennent les barres conductrices 9 selon une direction axiale et empêchent les barres de tourner sur elles-mêmes.

La figure 8 illustre une coupe partielle d'un septième mode de réalisation du rotor 4 selon la direction axiale.

Ce mode de réalisation diffère du mode de réalisation illustré à la figure 7 en ce que l'élément flexible comprend deux rondelles ressorts de type Belleville 14b montées en parallèle et comprenant chacune un trou 14d dans lequel s'écoule le fluide de refroidissement.

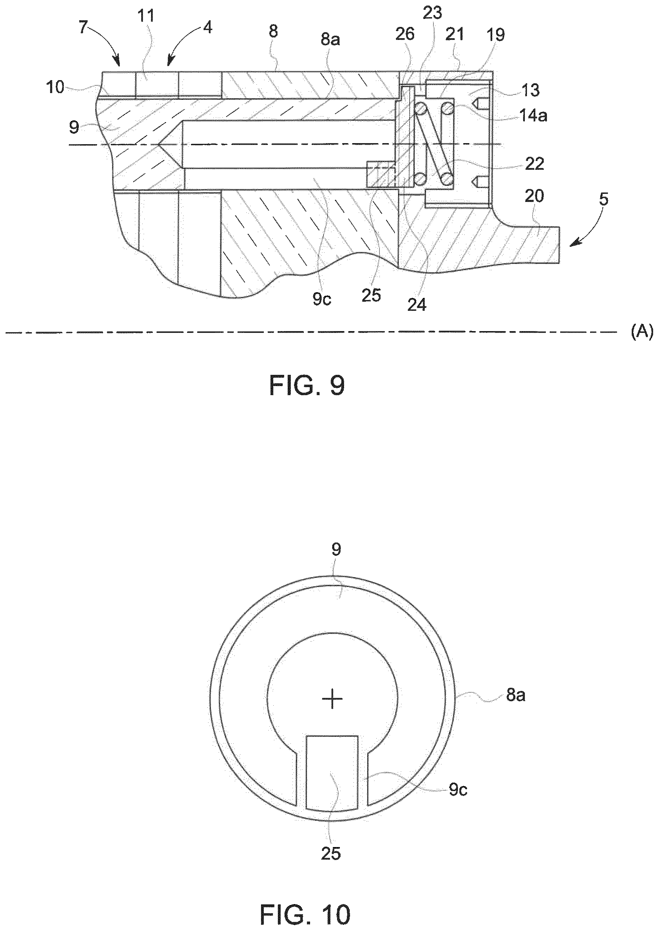

Les figures 9, 10 et 11 illustrent une coupe partielle et des vues partielles d'un huitième mode de réalisation du rotor 4 selon la direction axiale.

L'arbre rotorique 5 du rotor 4 est non traversant et comprend deux demi-arbres 20 compactant la masse magnétique 7 comprenant les plaques métalliques 11, les demi-arbres étant reliés par des tirants non représentés.

Les disques de court-circuit 8 sont intercalés entre la masse magnétique 7 et les demi-arbres 20.

L'élément de compaction comprend une bride de compaction 21 du demi-arbre 20.

Le diamètre extérieur de la bride de compaction 21 est sensiblement égal au diamètre extérieur de la masse magnétique 7 ou des disques de court-circuit 8.

La bride de compaction comprend un trou d'insertion débouchant 22 taraudé logeant le ressort 14a et le bouchon 13.

L'extrémité de la barre conductrice 9 est creuse et comprend une rainure 9c débouchant radialement.

En variante, l'extrémité de la barre conductrice 9 est pleine et comprend la rainure 9c débouchant radialement.

Le trou d'insertion 22 comprend une rainure 23 de guidage.

Les moyens de retenue comprennent en outre un élément de retenue 24 intercalé entre l'extrémité de la barre 9 et le ressort 14a.

De préférence, l'élément de retenue 24 est réalisé à partir d'un matériau d'isolation électrique.

L'élément de retenue 24 comprend un talon 25 et une languette 26 de sorte que le talon 25 s'encastre dans la rainure débouchant 9c de manière à former un épaulement en contact avec l'extrémité de la barre 9 et la languette 26 coulisse dans la rainure 23 de guidage de manière à empêcher la rotation de la barre 9 sur elle-même et à maintenir la barre 9 selon la direction axiale.

L'élément de retenue 24 est d'un seul tenant.

En variante, le talon 25 et/ou la languette 26 peuvent être rapportés sur l'élément retenue 24 par clavetage ou vissage.

En variante, l'élément flexible 14 comprend au moins une rondelle ressort de type Belleville 14b.

Selon une autre variante, l'élément de retenue 24 comprend un trou central débouchant dans lequel s'écoule le fluide de refroidissement.

Les figures 12, 13 et 14 illustrent une coupe partielle et des vues partielles d'un neuvième mode de réalisation du rotor 4 selon la direction axiale.

Ce mode de réalisation diffère du mode de réalisation illustré aux figures 9 à 11 en ce que l'extrémité de la barre conductrice 9 comprend un méplat 9d, un talon 25a comprenant un méplat 25b venant en contact avec le méplat 9d de la barre 9 manière à former un épaulement en contact avec l'extrémité de la barre et la languette 26 coulissant dans la rainure de guidage 23 de manière à empêcher la rotation de la barre 9 sur elle-même et à maintenir la barre 9 selon la direction axiale.

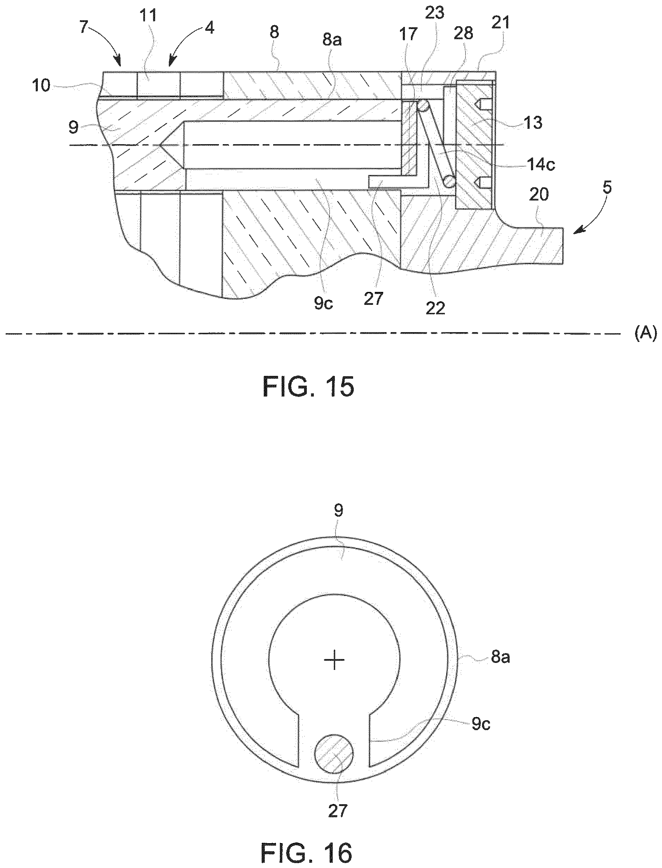

Les figures 15, 16 et 17 illustrent une coupe partielle et des vues partielles d'un dixième mode de réalisation du rotor 4 selon la direction axiale.

On retrouve le demi-arbre 20 comprenant la bride de compaction 21, la masse magnétique 7 comprenant les plaques métalliques 11, la barre conductrice 9 creuse à l'extrémité et comprenant la rainure 9c débouchant radialement, et le bouchon 13 ne comprenant pas d'évidement 19.

Un ressort 14c est intercalé entre l'extrémité de la barre conductrice 9 et le bouchon 13 de sorte qu'une première extrémité 27 du ressort s'encastre dans la rainure débouchant 9c et la deuxième extrémité 28 du ressort s'encastre dans la rainure de guidage 23 de manière à empêcher la rotation de la barre 9 sur elle-même et à maintenir la barre 9 selon une direction axiale.

L'élément isolant 17 est intercalé entre l'extrémité de la barre 9 et le ressort 14c.

En variante, l'extrémité de la barre 9 et le ressort 14c sont directement en contact.

En variante, l'extrémité de la barre 9 est pleine et comprend la rainure 9c débouchant radialement.

Dans les modes de réalisation du rotor 4 décrit précédemment, les barres conductrices 9 sont réparties uniformément sur un diamètre de la masse magnétique 7.

Selon un autre mode de réalisation, les barres conductrices 9 peuvent être réparties uniformément sur plusieurs diamètres de la masse magnétique 7, au moins une extrémité de chaque barre conductrice 9 étant maintenue par les moyens de retenue.

Dans les modes de réalisation décrits précédemment, les moyens de retenue sont insérés dans des trous d'insertion d'au moins un élément de compaction.

La figure 18 illustre une coupe partielle d'un onzième mode de réalisation du rotor 4 selon la direction axiale.

Ce mode de réalisation diffère du mode de réalisation illustré à la figure 12 en ce que les moyens de retenue comprenant le bouchon 13 comprenant l'évidement 19, le ressort 14a, l'élément de retenue 24 comprenant le talon 25a et comprenant la languette 26, sont insérés dans le trou d'insertion 8a du disque de court-circuit 8.

En outre, le diamètre extérieur D21 de la bride de compaction 21 est inférieur au diamètre d'implantation D10 des logements 10 dans la masse magnétique 7.

Le trou d'insertion 8a comprend une rainure de guidage 29 dans laquelle coulisse la languette 26 de manière à empêcher la rotation de la barre 9 sur elle-même.

Bien entendu, les moyens de retenue décrits aux figures 2 à 17 peuvent s'insérer dans le trou d'insertion 8a d'au moins un disque de court-circuit 8.

Les moyens de retenue permettent de maintenir les barres conductrices selon une direction axiale dans leur logement sans diminution significative de la section de passage du courant induit.

En outre, les moyens de retenue permettent d'empêcher que les barres conductrices tournent sur elles-mêmes de manière à obtenir un meilleur contact électrique entre les barres conductrices et les disques de court-circuit sans diminuer significativement la section de passage des courants induits transitant dans les barres conductrices.

Comme la section des barres conductrices 9 est plus importante, le rotor 4 permet de réaliser des machines électriques tournantes de puissance plus importante.

Les moyens de retenue permettent de retenir les barres conductrices 9 de section plus importante que celles de l'état de la technique maintenues par des vis ou des goupilles risquant de cisailler sous l'effet de la dilatation thermique axiale des barres conductrices.

## Revendications

1. Rotor (4) pour machine électrique tournante asynchrone à cage d'écureuil, comprenant deux éléments de compaction (6, 21) enserrant une masse magnétique (7) cylindrique, des disques de court-circuit (8) intercalés entre la masse magnétique et les éléments de compaction, et des barres conductrices (9) logées dans des logements (10) de la masse magnétique et réparties uniformément sur au moins un diamètre de la masse magnétique de sorte que les disques de court-circuit et les barres conductrices forment une cage d'écureuil, au moins un des éléments de compaction et des disques de court-circuit comprenant des trous d'insertion (8a, 12, 22) disposés chacun en regard d'un logement, **caractérisé en ce que** des moyens de retenue sont insérés dans chaque trou d'insertion pour retenir les barres conductrices dans les logements.

2. Rotor selon la revendication 1, dans lequel le trou d'insertion (8a, 12, 22) est borgne, les moyens de retenue comprenant un élément flexible (14a, 14b, 14c) intercalé entre une extrémité de la barre conductrice (9) et le fond du trou borgne (12, 22) de manière à maintenir la barre selon une direction axiale.

3. Rotor selon la revendication 1, dans lequel chaque trou d'insertion (8a, 12, 22) traversant comprend un taraudage, les moyens de retenue comprenant un bouchon (13) et un élément flexible (14a, 14b, 14c), le bouchon étant vissé dans le taraudage de manière à obturer l'extrémité libre de l'élément de compaction, et l'élément flexible étant intercalé entre une extrémité de la barre conductrice (9) et le bouchon de manière à maintenir la barre selon une direction axiale, dans lequel le bouchon (13) comprend de préférence un évidement (19) dans lequel est logé l'élément flexible (14), et dans lequel chaque trou d'insertion (8a, 12, 22) comprend en outre de préférence une gorge (15) comprenant un joint (16) de manière à rendre étanche le contact entre le bouchon (13) et l'élément de compaction (6, 21).

4. Rotor selon la revendication 3, dans lequel le bouchon (13) comprend un trou (13a) de sorte qu'un fluide de refroidissement s'écoule à travers les moyens de retenue.

5. Rotor selon la revendication 4, dans lequel le bouchon (13) comprend un taraudage accueillant une duse (18) calibrant le débit de fluide de refroidissement.

6. Rotor selon l'une quelconque des revendications 2 à 5, dans lequel l'extrémité de la barre (9) comprend une rainure (9c) débouchant radialement, le trou d'insertion (8a, 12, 22) comprenant une rainure de guidage (23), les moyens de retenue comprenant en outre un élément de retenue (24) intercalé entre l'extrémité de la barre et l'élément flexible (14a, 14b), l'élément de retenue comprenant un talon (25) et une languette (26), le talon s'encastrant dans la rainure débouchant de manière à former un épaulement en contact avec l'extrémité de la barre et la languette coulissant dans la rainure de guidage de manière à empêcher la rotation de la barre sur elle-même.

7. Rotor selon l'une quelconque des revendications 2 à 5, dans lequel l'extrémité de la barre (9) comprend un méplat (9d), le trou d'insertion (8a, 12, 22) comprenant une rainure de guidage (23), les moyens de retenue comprenant en outre un élément de retenue (24) intercalé entre l'extrémité de la barre de retenue et l'élément flexible (14a, 14b), l'élément de retenue comprenant un talon (25a) et une languette (26), le talon comprenant un méplat (25b) venant en contact avec le méplat de la barre (9) de manière à former un épaulement en contact avec l'extrémité de la barre et la languette coulissant dans la rainure de guidage de manière à empêcher la rotation de la barre sur elle-même.

8. Rotor selon l'une quelconque des revendications 6 à 8, dans lequel le talon (25, 25a) ou la languette (26) est rapporté sur l'élément de retenue (24).

9. Rotor selon l'une quelconque des revendications 2 à 8, dans lequel l'élément flexible (14) comprend un ressort (14a, 14c).

10. Rotor selon l'une quelconque des revendications 2 à 8, dans lequel l'élément flexible (14) comprend au moins une rondelle ressort de type Belleville (14b).

11. Rotor selon l'une quelconque des revendications 2 à 5, dans lequel l'extrémité de la barre (9) comprend une rainure débouchant radialement (9c), le trou d'insertion (8a, 12, 22) comprenant une rainure de guidage (23), l'élément flexible (14) comprenant un ressort (14c), une première extrémité (27) du ressort s'encastrant dans la rainure débouchant (9c) et la deuxième extrémité (28) du ressort s'encastrant dans la rainure de guidage (23) de manière à empêcher la rotation de la barre sur elle-même.

12. Rotor selon l'une quelconque des revendications 2 à 11, dans lequel les moyens de retenue comprennent en outre un élément isolant électrique (17) disposé entre la barre conductrice (9) et l'élément flexible (14).

13. Rotor selon l'une des revendications 1 à 12, dans lequel l'élément de compaction (6, 21) comprend un plateau de serrage (6) ou une bride de compaction (21) d'un demi-arbre non traversant.

14. Rotor selon l'une quelconque des revendications 1 à 13, dans lequel la masse magnétique (7) comprend des tôles magnétiques compactées, ou un empilement de plaques métalliques (11), ou un corps monobloc.

15. Machine électrique tournante asynchrone à cage d'écureuil (1) comprenant un rotor (4) selon l'une quelconque des revendications précédentes.

## Patentansprüche

1. Rotor (4) für drehende elektrische Asynchronmaschine mit Kurzschlussläufer, umfassend zwei Kompaktionselemente (6, 21), die eine zylindrische Magnetmasse (7) umschließen, Kurzschlussscheiben (8), die zwischen der Magnetmasse und den Kompaktionselementen eingeschoben sind, und Stromschienen (9), die in Aufnahmen (10) der Magnetmasse aufgenommen sind und über mindestens einen Durchmesser der Magnetmasse derart gleichförmig verteilt sind, dass die Kurzschlussscheiben und die Stromschienen einen Kurzschlussläufer bilden, wobei mindestens eines der Kompaktionselemente und der Kurzschlussscheiben Einfügebohrungen (8a, 12, 22) umfasst, die jeweils einer Aufnahme zugewandt angeordnet sind, **dadurch gekennzeichnet, dass** Rückhaltemittel in jeder Einfügebohrung eingefügt sind, um die Stromschienen in den Aufnahmen zurückzuhalten.

2. Rotor nach Anspruch 1, wobei die Einfügebohrung (8a, 12, 22) nichtdurchgehend ist, die Rückhaltemittel ein flexibles Element (14a, 14b, 14c) umfassen, das derart zwischen einem Ende der Stromschiene (9) und dem Boden der nichtdurchgehenden Bohrung (12, 22) eingeschoben ist, dass die Schiene in einer axialen Richtung gehalten wird.

3. Rotor nach Anspruch 1, wobei jede durchgehende Einfügebohrung (8a, 12, 22) ein Gewinde umfasst, die Rückhaltemittel einen Verschluss (13) und ein flexibles Element (14a, 14b, 14c) umfassen, der Verschluss derart in dem Gewinde festgeschraubt ist, dass er das freie Ende des Kompaktionselements verschließt, und das flexible Element derart zwischen einem Ende der Stromschiene (9) und dem Verschluss eingeschoben ist, dass die Schiene in einer axialen Richtung gehalten wird, wobei der Verschluss (13) vorzugsweise eine Aussparung (19) umfasst, in der das flexible Element (14) aufgenommen wird, und wobei jede Einfügebohrung (8a, 12, 22) weiter vorzugsweise eine Keilrille (15) umfasst, die eine Abdichtung (16) derart umfasst, dass diese den Kontakt zwischen dem Verschluss (13) und dem Kompaktionselement (6, 21) abdichtet.

4. Rotor nach Anspruch 3, wobei der Verschluss (13) eine Bohrung (13a) derart umfasst, dass eine Kühlflüssigkeit durch die Rückhaltemittel hindurch abfließt.

5. Rotor nach Anspruch 4, wobei der Verschluss (13) eine Gewinde umfasst, die eine Düse (18) aufnimmt, die den Kühlmitteldurchsatz kalibriert.

6. Rotor nach einem der Ansprüche 2 bis 5, wobei das Ende der Schiene (9) eine radial herausführende Nut (9c) umfasst, die Einfügebohrung (8a, 12, 22) eine Führungsnut (23) umfasst, die Rückhaltemittel weiter ein Rückhalteelement (24) umfassen, das zwischen dem Ende der Schiene und dem flexiblen Ende (14a, 14b) eingeschoben ist, das Rückhalteelement einen Absatz (25) und eine Lasche (26) umfasst, der Absatz sich derart in die herausführende Nut einpasst, dass er einen Anschlag in Kontakt mit dem Ende der Schiene bildet, und die Lasche derart in der Führungsnut gleitet, dass sie die Drehung der Schiene um sich selbst verhindert.

7. Rotor nach einem der Ansprüche 2 bis 5, wobei das Ende der Schiene (9) eine Flachstelle (9d) umfasst, die Einfügebohrung (8a, 12, 22) eine Führungsnut (23) umfasst, die Rückhaltemittel weiter ein Rückhalteelement (24) umfassen, das zwischen dem Ende der Halteschiene und dem flexiblen Ende (14a, 14b) eingeschoben ist, das Rückhalteelement einen Absatz (25) und eine Lasche (26) umfasst, der Absatz eine Flachstelle (25b) umfasst, die die Flachstelle der Schiene (9) derart kontaktiert, dass sie einen Anschlag in Kontakt mit dem Ende der Schiene bildet, und die Lasche derart in der Führungsnut gleitet, dass sie die Drehung der Schiene um sich selbst verhindert.

8. Rotor nach einem der Ansprüche 6 bis 8, wobei der Absatz (25, 25a) oder die Lasche (26) am Rückhalteelement (24) angebracht ist.

9. Rotor nach einem der Ansprüche 2 bis 8, wobei das flexible Element (14) eine Feder (14a, 14c) umfasst.

10. Rotor nach einem der Ansprüche 2 bis 8, wobei das flexible Element (14) mindestens eine Tellerfeder vom Typ Belleville (14b) umfasst.

11. Rotor nach einem der Ansprüche 2 bis 5, wobei das Ende der Schiene (9) eine radial herausführende Nut (9c) umfasst, die Einfügebohrung (8a, 12, 22) eine Führungsnut (23) umfasst, das flexible Element (14) eine Feder (14c) umfasst, ein erstes Ende (27) der Feder sich in die herausführende Nut (9c) einpasst und das zweite Ende (28) der Feder sich in die Führungsnut (23) einpasst, sodass sie die Drehung der Schiene um sich selbst verhindert.

12. Rotor nach einem der Ansprüche 2 bis 11, wobei die Rückhaltemittel weiter ein elektrisches isolierendes Element (17) umfassen, das zwischen der Stromschiene (9) und dem flexiblen Element (14) angeordnet ist.

13. Rotor nach einem der Ansprüche 1 bis 12, wobei das Kompaktionselement (6, 21) eine Pressplatte (6) oder einen Kompaktionsflansch (21) einer nichtdurchgehenden Halbachse umfasst.

14. Rotor nach einem der Ansprüche 1 bis 13, wobei die Magnetmasse (7) kompaktierte Magnetbleche oder einen Stapel von Metallplatten (11) oder einen einstückigen Körper umfasst.

15. Drehende elektrische Asynchronmaschine mit Kurzschlussläufer (1), umfassend einen Rotor (4) nach einem der vorstehenden Ansprüche.

## Claims

1. Rotor (4) for a squirrel-cage asynchronous rotating electrical machine, comprising two compaction elements (6, 21) clamping a cylindrical magnetic mass (7), short-circuit disks (8) inserted between the magnetic mass and the compaction elements, and conductive bars (9) housed in housings (10) of the magnetic mass and evenly distributed over at least one diameter of the magnetic mass, so that the short-circuit disks and the conductive bars form a squirrel-cage, at least one of the compaction elements and the short-circuit disks comprising insertion holes (8a, 12, 22) each disposed facing a housing, **characterised in that** retention means are inserted into each insertion hole to retain the conductive bars in the housings.

2. Rotor according to claim 1, wherein the insertion hole (8a, 12, 22) is blind, the retention means comprising a flexible element (14a, 14b, 14c) inserted between an end of the conductive bar (9) and the bottom of the blind hole (12, 22) so as to maintain the bar in an axial direction.

3. Rotor according to claim 1, wherein each insertion through hole (8a, 12, 22) comprises a threading, the retention means comprising a stopper (13) and a flexible element (14a, 14b, 14c), the stopper being screwed in the threading so as to block the free end of the compaction element, and the flexible element being inserted between an end of the conductive bar (9) and the stopper so as to maintain the bar in an axial direction, wherein the stopper (13) preferably comprises a recess (19) wherein is housed the flexible element (14), and wherein each insertion hole (8a, 12, 22) preferably further comprises a recess (15) comprising a seal (16) so as to seal the contact between the stopper (13) and the compaction element (6, 21).

4. Rotor according to claim 3, wherein the stopper (13) comprises a hole (13a) so that a cooling fluid flows through the retention means.

5. Rotor according to claim 4, wherein the stopper (13) comprises a threading receiving a choke (18) calibrating the cooling fluid flow rate.

6. Rotor according to any one of claims 2 to 5, wherein the end of the bar (9) comprises a radially through groove (9c), the insertion hole (8a, 12, 22) comprising a guiding groove (23), the retention means further comprising a retention element (24) inserted between the end of the bar and the flexible element (14a, 14b), the retention element comprising a heel (25) and a strip (26), the heel being fitted in the through groove so as to form a shoulder in contact with the end of the bar and the strip sliding into the guiding groove so as to prevent the rotation of the bar on itself.

7. Rotor according to any one of claims 2 to 5, wherein the end of the bar (9) comprises a flat part (9d), the insertion hole (8a, 12, 22) comprising a guiding groove (23), the retention means further comprising a retention element (24) inserted between the end of the retention bar and the flexible element (14a, 14b), the retention element comprising a heel (25a) and a strip (26), the heel comprising a flat part (25b) coming into contact with the flat part of the bar (9) so as to form a shoulder in contact with the end of the bar and the strip sliding into the guiding groove so as to prevent the rotation of the bar on itself.

8. Rotor according to anyone of claims 6 to 8, wherein the heel (25, 25a) or a strip (26) is returned on the retention element (24).

9. Rotor according to any one of claims 2 to 8, wherein the flexible element (14) comprises a spring (14a, 14c).

10. Rotor according to any one of claims 2 to 8, wherein the flexible element (14) comprises at least one Belleville-type spring washer (14b).

11. Rotor according to any one of claims 2 to 5, wherein the end of the bar (9) comprises a radially through groove (9c), the insertion hole (8a, 12, 22) comprising a guiding groove (23), the flexible element (14) comprising a spring (14c), a first end (27) of the spring being fitted into the through groove (9c) and the second end (28) of the spring being fitted in the guiding groove (23) so as to prevent the rotation of the bar on itself.

12. Rotor according to any one of claims 2 to 11, wherein the retention means further comprise an electrical insulating element (17) disposed between the conductive bar (9) and the flexible element (14).

13. Rotor according to one of claims 1 to 12, wherein the compaction element (6, 21) comprises a clamping plate (6) or a compaction flange (21) of an end stub shaft.

14. Rotor according to any one of claims 1 to 13, wherein the magnetic mass (7) comprises compacted magnetic sheets, or a stack of metal plates (11), or a one-piece body.

15. Squirrel-cage asynchronous rotating electrical machine (1) comprising a rotor (4) according to any one of the preceding claims.
